# EUROPÄISCHE PATENTANMELDUNG

(11) **EP 2 744 061 A1**
(43) Veröffentlichungstag der Anmeldung: **18.06.2014**
(21) Anmeldenummer: 12008304.3
(22) Anmeldetag: 12.12.2012
(51) Int. Cl.: H02H 1/00, H02H 7/04, H01F 27/40

(54) **Transformatorschutzsystem**

(71) Anmelder: ABB Technology AG, 8050 Zürich (CH)
(72) Erfinder: Tepper, Jens, 59929 Brilon (DE); Tamzarti, Abdelbahi, 34127 Kassel (DE); Leenen, Nils, 64653 Lorsch (DE); Staudinger, Stefan, 59909 Bestwig (DE)
(74) Vertreter: Kock, Ina

(57) **Zusammenfassung**

Die Erfindung betrifft ein Transformatorschutzsystem (10), umfassend ein Schutzgehäuse (12), einen darin angeordneten Transformatar, insbesondere einen Trockentransformator, mit Transformatorkern (14) und mit wenigstens einer primärseitigen (16, 18) und einer damit magnetisch gekoppelten sekundärseitigen elektrischen Wicklung, wenigstens eine Erfassungsvorrichtung (22, 24, 26) für eine Messgröße, aus welcher das Auftreten eines Störlichtbogens (20) innerhalb des Schutzgehäuses (12) ableitbar ist, eine Auswerteeinheit (28) zur Generierung eines Fehlersignals (30) aus der Messgröße der wenigstens einen Erfassungsvorrichtung im Falle eines Störlichtbogens (20) und wenigstens eine Schnellerdungsvorrichtung (32, 34, 36, 38) für wenigstens eine der elektrischen Wicklungen (16, 18), welche dafür vorgesehen ist durch das Fehlersignal (30) aktiviert zu werden, wobei die Schnellerdungsvorrichtung (32, 34, 36, 38) derart ausgestaltet ist, dass eine wirksame elektrische Erdung unittelbar nach Aktivierung des Fehlersignals (30) gewährleistet ist.

## Beschreibung

Die Erfindung betrifft ein Transformatorschutzsystem, umfassend ein Schutzgehäuse, einen darin angeordneten Transformator, insbesondere einen Trockentransformator, mit Transformatorkern und mit wenigstens einer primärseitigen und einer damit magnetisch gekoppelten sekundärseitigen elektrischen Wicklung.

Es ist allgemein bekannt, dass Hochspannungstransformatoren, beispielsweise im Spannungsbereich von 1kV bis 72,5kV oder darüber, als Trockentransformatoren ausgeführt werden, welche beispielsweise eine Leistung im Bereich von 0,5MVA bis 63MVA aufweisen. Für einige Anwendungen ist jedoch die Anordnung eines derartigen Transformators in einem Schutzgehäuse erforderlich. Dies kann verschiedene Gründe haben, beispielsweise, dass der Transformator vor einer rauen Umgebung wie salzhaltiger Meeresluft geschützt werden soll. In einem solchen Fall ist das Schutzgehäuse bevorzugter Weise ein hermetisch gekapseltes Gehäuse, wobei die betriebsmäßig in diesem anfallende Wärmeenergie mittels eines Wärmeübertragers nach außen abgeleitet wird. Aber auch zum Personenschutz werden Transformatoren bedarfsweise in einem Schutzgehäuse untergebracht, um eine menschliche Berührung spannungsführender Teile auszuschließen. Transformatoren größerer Leistung, beispielsweise 200MVA und höher, werden als Öltransformatoren ausgeführt. Hierbei ist der Transformator in einem ölgefüllten Kessel angeordnet, welcher letztendlich auch ein Schutzgehäuse im Sinne der Erfindung darstellt.

Nachteilig hierbei ist jedoch, dass im Fehlerfall zwischen spannungsführenden Teilen des Transformators oder dessen Zuleitungen durch das Schutzgehäuse und dem aus Sicherheitsgründen geerdetem Gehäuse Störlichtbögen auftreten können. Ein derartiger Störlichtbogen weist eine hohe Energiedichte auf und kann im Kurzschlussfall je nach Einspeiseleistung des Versorgungsnetzes ein normales Schutzgehäuse völlig zerstören. Aus diesem Grund sind Schutzgehäuse für Transformatoren verfügbar, welche dafür ausgelegt sind, dass für eine gewisse Zeit ein Lichtbogen in deren Innenraum brennen kann, ohne dass eine Personengefährdung oder eine Zerstörung des Schutzgehäuses erfolgt. Ein typisches Beispiel hierfür ist beispielsweise in der WO 2012118645 A1 aufgeführt. Derartige Schutzgehäuse sind jedoch sehr aufwändig zu fertigen. Unter dem Begriff Schutzgehäuse ist in jedem Fall auch eine Einhausung zu verstehen.

Ausgehend von diesem Stand der Technik ist es Aufgabe der Erfindung, einen verbesserten Lichtbogenschutz für in Schutzgehäusen angeordnete Transformatoren anzugeben.

Diese Aufgabe wird gelöst durch ein Transformatorschutz der eingangs genannten Art. Dieses ist dadurch gekennzeichnet, dass weiterhin vorgesehen sind wenigstens eine Erfassungsvorrichtung für eine Messgröße ist, aus welcher das Auftreten eines Störlichtbogens innerhalb des Schutzgehäuses ableitbar ist, eine Auswerteeinheit zur Generierung eines Fehlersignals aus der Messgröße der wenigstens einen Erfassungsvorrichtung im Falle eines Störlichtbogens und wenigstens eine Schnellerdungsvorrichtung für wenigstens die primärseitige elektrische Wicklungen, welche dafür vorgesehen ist durch das Fehlersignal aktiviert zu werden, wobei die Schnellerdungsvorrichtung derart ausgestaltet ist, dass eine wirksame elektrische Erdung ummittelbar, spätestens aber 5ms nach Aktivierung des Fehlersignals gewährleistet ist.

Ein wesentlicher Einflussfaktor auf die Zerstörungskraft eines Störlichtbogens ist dessen Brenndauer. Die Grundidee der Erfindung besteht darin, die Brenndauer eines Lichtbogens durch eine Schnellerdung der elektrischen Anschlüsse des Transformators derart zu verkürzen, dass eine Schädigung des Schutzgehäuses beziehungsweise des Transformators durch den Störlichtbogen ausgeschlossen beziehungsweise zumindest deutlich verringert ist. Die im Netzbetrieb ohne zusätzliche Maßnahmen gegebene Dauer eines Kurzschlusses beziehungsweise eines mit diesem verbundenen Lichtbogens hängt vom Schutzsystem des Netzes ab, in den der Transformator integriert ist. Ein derartiges Schutzsystem erkennt einen Kurzschluss anhand eines erhöhten Kurzschlussstromes und schaltet die betroffenen Netzteile mittels im Netz befindlicher Leistungsschalter möglichst selektiv ab.

Die Erfassung eines Kurzschlusses durch ein entsprechendes Netzschutzgerät benötigt beispielsweise vom Eintritt des Kurzschlusses bis zum Geben eines Ausschaltsignals an die betreffenden Leistungsschalter 50ms. Die Leistungsschalter selbst benötigen ebenfalls eine in dieser Größenordnung liegende Zeitspanne vom Erhalt des Ausschaltsignals bis zum endgültigen Ausschalten des Kurzschlusses. Somit liegt ein Kurzschluss wenigstens 100ms, also 5 Netzperioden bei einer Frequenz von 50Hz, an bevor er durch den Netzschutz ausgeschaltet wird.

Ein während dieses Zeitraumes anstehender Störlichtbogen verursacht erhebliche Schäden beziehungsweise sogar eine Zerstörung eines nicht für Störlichtbögen ausgelegten Schutzgehäuses. Durch eine erfindungsgemäße Schnellerdung der wenigstens einen primärseitigen Wicklung werden zumindest deren fehlerbehaftete Leiter unmittelbar nach Eintritt des Kurzschlusses geerdet, so dass der Kurzschlussstrom nach der Schnellerdung nunmehr über die Schnellerdungsvorrichtung fließt und der Lichtbogen erlischt. Der weiterhin fließende Kurzschlussstrom wird durch den Netzschutz erkannt und nachfolgend ausgeschaltet. Die Detektion eines Störlichtbogens und die Schnellerdung erfolgt erfindungsgemäß möglichst schnell, nämlich binnen weniger Millisekunden. So ist sichergestellt, dass der Kurzschlussstrom noch nicht seinen Maximalwert erreicht hat wenn der Lichtbogen bereits erloschen womit das Risiko einer Zerstörung des Schutzgehäuses beziehungsweise der Grad einer Beschädigung durch den Störlichtbogen in vorteilhafter Weise erheblich reduziert ist. Die Zeitangabe von 5ms stellt einen ungefähren Maximalwert dar, welcher einer Viertel Periode bei 50Hz Netzfrequenz entspricht. Dies ist ein Wert, bei welchem ein Kurzschlussstrom unter Berücksichtigung eines maximalen Gleichstromanteils etwa 50% seines Spitzenwertes erreicht hat. Idealerweise sind selbstverständlich kürzere Zeiträume wie 2-3ms und darunter anzustreben.

Es wird zunächst idealerweise angenommen, dass die Energieflussrichtung innerhalb des Transformators stets von der primärseitigen Wicklung zur sekundärseitigen Wicklung erfolgt, der zugehörige primärseitige Netzteil also über aktive Einspeisungen verfügt während der sekundärseitige Netzteil im Wesentlichen nur über passive Verbraucher verfügt. Auf diese Weise ist sichergestellt, dass im Falle eines primärseitigen Störlichtbogens ein Kurzschlussstrom durch den Transformator vermieden ist und im Falle eines sekundärseitigen Störlichtbogens der damit verbundene Kurzschlussstrom den Transformator nur möglichst kurz belastet.

Gemäß einer weiteren Ausgestaltungsform des erfindungsgemäßen Transformatorschutzsystems ist auch für die sekundärseitige Wicklung eine jeweilige Schnellerdungsvorrichtung vorgesehen. Diese ist bevorzugter Weise synchron mit der Schnellerdungsvorrichtung für die primärseitige Wicklung zu schalten. So ist sichergestellt, dass nach erfolgter Schnellerdung auch bei einem aktiven sekundärseitigen Netzteil kein Kurzschlussstrom durch den Transformator fließt. Da eine Schnellerdung erfindungsgemäß bereits vor Erreichen des Maximums des Kurzschlußstromes erfolgt unterbleibt in vorteilhafter Weise auch die damit verbundene mechanische Belastung der Wicklungen. Ebenso ist bei einem eigentlich passiven sekundärseitigen Netzteil ausgeschlossen, dass durch Rückspeisung eventueller rotierender Verbraucher eine sekundärseitige Speisung eines Störlichtbogens erfolgt.

Einer weiteren Ausgestaltungsvariante des erfindungsgemäßen Transformatorschutzsystems folgend umfasst wenigstens eine Erfassungsvorrichtung einen Lichtsensor zur Detektion von innerhalb des Schutzgehäuses auftretenden Lichterscheinungen. Ein Lichtbogen ist zwangsläufig mit einer Emission von Licht verbunden. Wenn also sichergestellt ist, dass in das Schutzgehäuse kein Streulichteinfall von außen auf den Erfassungsbereich des Lichtsensors erfolgt, so kann ein Lichtsensor zur Detektion eines Lichtbogens innerhalb eines Schutzgehäuses verwendet werden. Eine optische Erkennung eines Lichtbogens ermöglicht innerhalb kürzester Zeit, beispielsweise weniger als einer Millisekunde, eine sichere Detektion eines Störlichtbogens. Eine derart kurze Reaktionszeit wird erfindungsgemäß benötigt, um einen Störlichtbogen bereits deutlich vor Erreichen des Maximums des damit verbundenen Kurzschlußstromes auszuschalten.

Entsprechend einer weiteren Ausgestaltungsvariante des Transformatorschutzsystems weist das Schutzgehäuse mehrere unterteilte innere Bereiche auf, wobei jedem dieser Bereiche wenigstens ein Lichtsensor zugeordnet ist. Eine solche Unterteilung kann beispielsweise durch eine Luftleitplatte eines gehäuseinternen Kühlsystems gegeben sein. Die dadurch gebildeten Bereiche sind nicht völlig separiert, jedoch ist dadurch eine optische Abschattung des Erfassungsbereiches eines jeweiligen Lichtsensors gegeben, so dass entsprechend ein Lichtsensor der dem jeweiligen Bereich zuzuordnen ist vorhanden ist. Damit ist sichergestellt, dass der gesamte Innenraum des Schutzgehäuses, in welchem Lichterscheinungen auftreten können, auch durch entsprechende Lichtsensoren erfasst ist. Ein Störlichtbogen kann somit nicht unentdeckt bleiben.

Gemäß einer bevorzugten Ausführungsvariante ist für wenigstens zwei Bereiche ein gemeinsamer Lichtsensor mit in diese hineinragendem oder durch diese geführten Lichtwellenleiter vorgesehen. Hierdurch ist in vorteilhafter Weise ermöglicht, dass ein und derselbe Lichtsensor Lichterscheinungen in mehreren optisch voneinander abgeschatteten Bereichen erfassen kann. Bedarfsweise lässt sich ein derartiger Lichtwellenleiter auch direkt zu Punkten innerhalb des Schutzgehäuses führen, welche besonders gefährdet bezüglich eines Störlichtbogens sind.

Ein Lichtwellenleiter umfasst üblicherweise einen inneren Materialkern mit einem Material eines ersten optischen Brechungsindex und eine Mantelschicht mit einem Material eines zweiten Brechungsindex. So lässt sich ein Austritt von in dem Lichtwellenleiter geführten Licht an seinen Außenflächen bei entsprechender Materialauswahl vorteilhaft minimieren. Der Lichteintritt in einen Lichtwellenleiter erfolgt deshalb typischerweise an einer seiner beiden Stirnflächen. Dennoch ist es aber erfindungsgemäß auch möglich - zumindest in geringem Umfang - Licht durch die radiale Außenfläche eines Lichtwellenleiters in diesen eintreten zu lassen. Gegebenenfalls ist auch ein optisches Auge für den Lichteintritt vorzusehen. Dies ist beispielsweise durch eine entsprechende Materialwahl mit geeigneten Brechungsindizes oder auch durch lokales Abtragen der Mantelschicht realisierbar. Erfindungsgemäß ist dies optional vorgesehen, so dass in einfacher Weise ein Lichtwellenleiter beispielsweise mäanderförmig zu den relevanten Stellen im Inneren des Schutzgehäuses geführt werden kann. Eine Verästelung des Lichtwellenleiters ist damit in vorteilhafter Weise vermieden und er kann damit besonders einfach verlegt werden.

Gemäß einer weiteren Ausgestaltungsvariante des erfindungsgemäßen Transformatorschutzsystems umfasst wenigstens eine Erfassungsvorrichtung einen Stromsensor zur Ermittlung eines durch wenigstens eine der Wicklungen fließenden elektrischen Stromes. Auch ein überhöhter elektrischer Strom ist ein geeigneter Indikator für einen Lichtbogen innerhalb des Transformators.

Um jedoch Fehlauslösungen zu vermeiden, ist es in einer besonders bevorzugten erfindungsgemäßen Ausgestaltung vorgesehen, die Auswerteeinheit derart auszustalten, dass ein Fehlersignal erst bei gleichzeitiger jeweiliger Detektion eines Störlichtbogens anhand mehrerer physikalisch unabhängiger Messgrößen gegeben wird. Dies bedeutet beispielsweise die Verwendung wenigstens eines Lichtsensors und eines Stromsensors oder auch eine Kombination aus Lichtsensor und Drucksensor. Ein Lichtsensor ist wie erwähnt geeignet, Störlichtbögen sehr schnell zu detektieren. Ein zu hoher Strom beispielsweise kann allerdings mehrere Ursachen haben, welche gegebenenfalls auch nicht durch einen Störlichtbogen bedingt sind. Eine logische UND Verknüpfung beider Bedingungen reduziert damit in vorteilhafter Weise das Risiko einer eventuellen Fehlauslösung. Da ein Lichtbogen zumeist mit einer Gasentwicklung verbunden ist, ist ein Druckanstieg im geschlossenen Schutzgehäuse ebenfalls ein geeignetes Kriterium für die Detektion eines Störlichtbogens.

In bevorzugter Art weist die Schnellerdungsvorrichtung einen Antrieb auf, welcher auf einer initiierbaren explosionsartigen Gasexpansion beruht. Durch Zündung eines Treibsatzes beispielsweise wird in einem Hohlzylinder der Schnellerdungsvorrichtung ein Überdruck erzeugt, welcher einen Schaltkontakt in Richtung einer Erdungsschiene bewegt. Ein derartiger Vorgang benötigt vom Erhalt des Fehlersignals bis zum wirksamen Erden beispielsweise 1,5ms, so dass sich unter Berücksichtigung einer Zeit von ca. 1ms zur Detektion eines Lichtbogens eine Reaktionszeit von ca. 2,5ms ergibt. Es sind beispielsweise aber auch Federspeicherantriebe denkbar.

Gemäß einer besonders bevorzugten Ausgestaltungsform des Transformatorschutzsystems ist das Schutzgehäuse hermetisch gekapselt und weist einen Wärmeübertrager zur Abführung der betriebsmäßig in diesem entstehenden Abwärme auf. Gerade bei Anwendungen im Schiffsbereich beispielsweise ist ein Transformator vor salzhaltiger Meeresluft zu schützen. Das Schutzgehäuse dient hierbei der hermetischen Kapselung des Transformators, wobei die betriebsmäßig entstehende Abwärme dann mittels eines Wärmeübertrager an die Umgebung abgeführt wird. Auf diese Weise kann ein normales Kühlgehäuse ohne zusätzlichen Aufwand gegen Störlichtbögen geschützt werden.

Einer weiteren Erfindungsvariante folgend ist das Schutzgehäuse bereits ein Störlichtbogengehäuse, welches durch den erfindungsgemäßen Schutz eine höhere Sicherheitseinstufung erhalten kann. Bevorzugter Weise ist hierbei die Schnellerdungsvorrichtung außerhalb des Schutzgehäuses angeordnet. Hierdurch ist ein einfacher nachträglicher Einbau beziehungsweise auch eine einfache Wartung ermöglicht. Die Schnellerdungsvorrichtung muss nicht notwendiger Weise direkt am Schutzgehäuse angebracht sein, vielmehr reicht auch eine Anordnung an einer gegebenenfalls vorhandenen Sammelschiene aus, insoweit zwischen Sammelschiene und Transformator keine Netzschutzvorrichtung beziehungsweise ein Leistungsschalter vorgesehen ist, durch welche der Transformator von der Sammelschiene getrennt wird.

Gemäß einer weiteren erfindungsgemäßen Ausführungsform des Transformatorschutzsystems sind mehrere Transformatoren mit jeweiligem Schutzgehäuse vorgesehen, welche mittels gemeinsamer Verschaltungsmittel elektrisch miteinander verbunden sind und welche eine auf die gemeinsamen Verbindungsmittel wirkende Schnellerdungsvorrichtung aufweisen. Auf diese Weise lassen sich mehrere Transformatoren, welche parallel an ein und derselben Sammelschiene angeschlossen sind, durch eine gemeinsame Schnellerdungsvorrichtung schützen, wobei jeder einzelne Transformator jedoch über wenigstens eine eigene Erfassungsvorrichtung verfügen muss. Bedarfsweise ist auch eine gemeinsame Auswerteeinheit vorzusehen, welche die erfassten Messsignale der Erfassungsvorrichtungen gemeinsam auswertet. Eine derartige Ausführungsform eignet sich insbesondere bei einem sekundärseitig passiven Verteilnetz, beispielsweise auch auf einem Schiff oder dergleichen.

Gemäß einer weiteren bevorzugten Ausgestaltungsform sind die elektrischen Wicklungen dreiphasig ausgeführt, also beispielsweise drei Wickelkörper mit je einer primärseitigen und einer sekundärseitigen Wicklung. Dreiphasige Ausführungsformen von Transformatoren sind insbesondere in stationären Energieverteilungsnetzen üblich. Hierbei ist erfindungsgemäß grundsätzlich die Möglichkeit vorgesehen, dass auch bei einem einphasigen Störlichtbogen dreiphasig geerdet wird - hierdurch ist ein Höchstmaß an Sicherheit erreicht.

In einigen wenigen Fällen kann es sich auch als sinnvoll erweisen, dass bei einem einphasigen Kurzschluss selektiv nur die fehlerbehaftete Phase geerdet wird. Die Rückwirkungen auf das Versorgungsnetz sind dann geringer. Hierzu ist selektiv die fehlerbehaftete Phase zu erkennen, d.h. neben beispielsweise einem Lichtsensor ist als zusätzliches Kriterium beispielsweise ein jeweiliger Überstrom zu verwenden. In diesem Fall ist auch die Schnellerdungsvorrichtung für eine einphasige Auslösung vorzusehen.

Gemäß einer weiterhin bevorzugten Variante des Transformatorschutzsystems ist die Schnellerdungsvorrichtung für eine dreiphasige Auslösung zwischen den jeweiligen Phasen vorgesehen. Dies kann sowohl mit als auch ohne Kontakt zu Erde erfolgen.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:

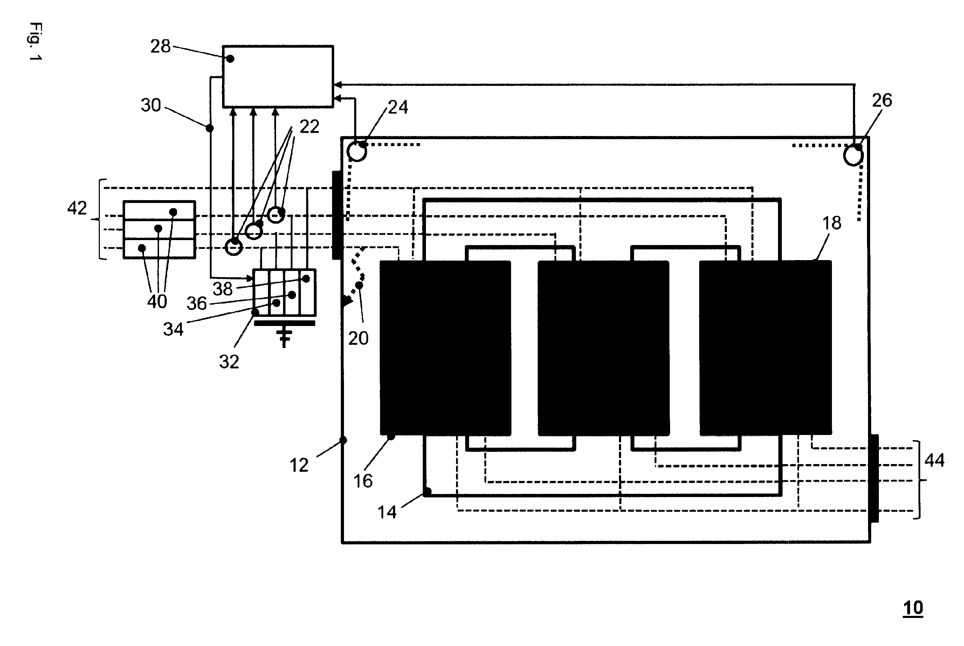

Fig. 1 ein exemplarisches Transformatorschutzsystem.

Fig. 1 zeigt ein exemplarisches Schutzsystem in einer Prinzipskizze 10. In einem Schutzgehäuse 12 ist ein Transformator mit Transformatorkern 14 und mehreren Wicklungen 16, 18 angeordnet. Das Schutzgehäuse ist geschlossen, so dass kein Streulicht von außen in dieses eindringen kann. Die primäre Eigenschaft des Schutzgehäuses besteht darin, den in ihm angeordneten Transformator vor rauen Betriebsbedingungen wie salzhaltiger Seeluft zu schützen. Deshalb ist auch ein nicht gezeigter Wärmeübertrager vorgesehen, welcher die in den Schutzgehäuse 12 anfallende betriebsmäßige Abwärme des Transformators nach außen abführt.

Die Wicklungen 16, 18 des Transformators umfassen jeweils drei primärseitige und drei sekundärseitige Wicklungen, deren gehäuseseitigen Anschlüsse mit der Bezugsziffer 42 und 44 gezeigt sind. Je eine primärseitige und eine sekundärseitige Wicklung sind auf einem gemeinsamen hohlzylindrischen Wickelkörper angeordnet, welcher seinerseits von einem jeweiligen Schenkel des Transformatorkerns 14 durchgriffen wird. Innerhalb des Gehäuses 12 ist ein exemplarischer Störlichtbogen 20 skizziert, welcher zwischen einer der primärseitigen Zuleitungen und dem Gehäuse 12 brennt. An der Außenseite des Gehäuses vorgesehen ist eine vierpolige Schnellerdungsvorrichtung mit jeweils einer einphasigen Schnellerdungsvorrichtung 32, 34, 36, 38 für jeden Phasenleiter und den gemeinsamen Rückleiter. Typischerweise ist es aber vorgesehen, dass alle vier Schnellerdungsvorrichtungen 32, 34, 36, 38 auch bei einem einphasigen Fehler synchron schalten.

Der Störlichtbogen 20 wird insbesondere aufgrund der damit verbundenen Lichterscheinungen von einem Lichtsensor 24 erfasst, welcher ein entsprechendes Messsignal an eine Auswerteeinheit 28 weiterleitet. Diese Auswerteeinheit 28 wertet zudem noch Messsignale eines weiteren Lichtsensors 26 sowie Messsignale von Stromwandlern 22 aus. Aufgrund einer optischen Abschattung des Lichtsensors 26 von dem Lichtbogen 20 wird das Messsignal des Lichtsensors 26 alleine gegebenenfalls nicht ausreichend sein für eine Detektion des Störlichtbogens 20. Die Stromwandler 22 erzeugen für jeden Phasenleiter der primärseitigen Zuleitungen ein Messsignal. Da Überströme in einem Phasenleiter alleine - zumindest nicht innerhalb einer gewünschten Zeitspanne von ca. 1ms - ein eindeutiges Kriterium für das Vorhandensein eines Störlichtbogens sein können, wird von der Auswerteeinheit 28 eine logische UND - Verknüpfung zwischen der optischen Detektion eines Störlichtbogens durch die Lichtsensoren 24 oder 26 mit dem Auftreten eines Überstromes in wenigstens einem der drei Phasenleitern gebildet. Es sind Abschätzalgorithmen denkbar, welche als Fehlerkriterium nicht von einem Überstrom an sich sondern beispielsweise von einem Abweichen eines prognostizierten Stromwertes um einen Differenzbetrag ausgehen.

Für den Fall, dass ein Lichtbogen 20 durch die Auswerteeinheit 28 detektiert wurde, wird binnen kürzester Zeit, z.B. 1ms nach Eintritt des Lichtbogens, ein Fehlersignal 30 an die Schnellerdungsvorrichtungen 32, 34, 36, 38 gegeben, welche dann ebenfalls in kürzester Zeit, beispielsweise binnen zwei weiteren Millisekunden, die primärseitigen Zuleitungen erden. In diesem Fall wird in allen drei Phasenleitern ein Kurzschluss erzeugt, wobei der Kurzschlussstrom ab wirksamer Schnellerdung dann außerhalb des Transformators fließt. Der Lichtbogen erlischt somit nach ca. 3ms und eine weitere Gefährdung des Schutzgehäuses 12 ist ausgeschlossen.

Der nunmehr dreiphasige Kurzschluss ist mit einem entsprechend hohen dreiphasigen Kurzschlussstrom verbunden, so dass der in einem Energieversorgungsnetz stets vorhandene und in dieser Fig. nicht gezeigte Netzschutz anspricht und eine selektive Abschaltung der fehlerbehafteten Netzteile initiiert. Dies passiert in diesem Beispiel durch ein Öffnen der Leistungsschalter 40 für alle primärseitigen Zuleitungen. Eine Schaltverzugszeit von 150ms angenommen steht der Kurzschluss also insgesamt 150ms an, bevor eine endgültige Ausschaltung durch den Netzschutz erfolgt.

Nach Ausschaltung des Kurzschlusses durch die Leistungsschalter 40 ist - nach Einleitung aller notwendigen Sicherheitsvorkehrungen - das Schutzgehäuse auf eventuelle Beschädigung zu überprüfen und die Ursache für den Störlichtbogen herauszufinden. Nach Beseitigung möglicher Fehlerquellen ist gegebenenfalls die Schnellschutzvorrichtung 32, 34, 36, 38 wieder in einen betriebsfähigen Zustand zu versetzen und der Transformator kann wieder in den Netzbetrieb eingebunden werden.

Gemäß einer weiteren nicht gezeigten Ausführungsform sind sekundärseitig ebenfalls Schnellerdungsvorrichtungen vorgesehen, um im Fehlerfall den Transformator beidseitig zu erden. Somit ist ein Höchstmaß an Sicherheit für den Fehlerfall realisiert.

### Bezugszeichenliste

- 10: exemplarisches Transformatorschutzsystem
- 12: Schutzgehäuse
- 14: Transformatorkern
- 16: erste elektrische Wicklung
- 18: zweite elektrische Wicklung
- 20: exemplarischer Störlichtbogen
- 22: erste Erfassungsvorrichtung (Stromwandler)
- 24: zweite Erfassungsvorrichtung (Lichtsensor)
- 26: dritte Erfassungsvorrichtung (Lichtsensor)
- 28: Auswerteeinheit
- 30: Fehlersignal
- 32: erste Schnellerdungsvorrichtung
- 34: zweite Schnellerdungsvorrichtung
- 36: dritte Schnellerdungsvorrichtung
- 38: vierte Schnellerdungsvorrichtung
- 40: Leistungsschalter
- 42: primärseitige Anschlüsse
- 44: sekundärseitige Anschlüsse

## Patentansprüche

1. Transformatorschutzsystem (10), umfassend ein Schutzgehäuse (12), einen darin angeordneten Transformator, insbesondere einen Trockentransformator, mit Transformatorkern (14) und mit wenigstens einer primärseitigen (16, 18) und einer damit magnetisch gekoppelten sekundärseitigen elektrischen Wicklung, wenigstens eine Erfassungsvorrichtung (22, 24, 26) für eine Messgröße, aus welcher das Auftreten eines Störlichtbogens (20) innerhalb des Schutzgehäuses (12) ableitbar ist, eine Auswerteeinheit (28) zur Generierung eines Fehlersignals (30) aus der Messgröße der wenigstens einen Erfassungsvorrichtung im Falle eines Störlichtbogens (20) und wenigstens eine Schnellerdungsvorrichtung (32, 34, 36, 38) für wenigstens die primärseitige Wicklung (16, 18), welche dafür vorgesehen ist, durch das Fehlersignal (30) aktiviert zu werden, wobei die Schnellerdungsvorrichtung (32, 34, 36, 38) derart ausgestaltet ist, dass eine wirksame elektrische Erdung unmittelbar nach Aktivierung des Fehlersignals (30) gewährleistet ist.

2. Transformatorschutzsystem nach einem der vorherigen Ansprüche, **dadurch gekennzeichnet, dass** auch für die sekundärseitige Wicklung (16, 18) eine jeweilige Schnellerdungsvorrichtung (32, 34, 36, 38) vorgesehen ist.

3. Transformatorschutzsystem nach Anspruch 1 oder 2, **dadurch gekennzeichnet dass** wenigstens eine Erfassungsvorrichtung (22, 24, 26) einen Lichtsensor zur Detektion von innerhalb des Schutzgehäuses (12) auftretenden Lichterscheinungen umfasst.

4. Transformatorschutzsystem nach einem der vorherigen Ansprüche, **dadurch gekennzeichnet, dass** das Schutzgehäuse (12) mehrere unterteilte innere Bereiche aufweist, wobei jedem dieser Bereiche wenigstens ein Lichtsensor zugeordnet ist.

5. Transformatorsystem nach Anspruch 4, **dadurch gekennzeichnet, dass** für wenigstens zwei Bereiche ein gemeinsamer Lichtsensor mit in diese hineinragendem oder durch diese geführten Lichtwellenleiter vorgesehen ist.

6. Transformatorschutzsystem nach Anspruch 5, **dadurch gekennzeichnet, dass** der Lichtwellenleiter zur Aufnahme von Licht zumindest an Teilen seiner radialen Außenfläche vorgesehen ist.

7. Transformatorschutzsystem nach einem der vorherigen Ansprüche, **dadurch gekennzeichnet, dass** wenigstens eine Erfassungsvorrichtung (22, 24, 26) einen Stromsensor zur Ermittlung von durch wenigstens eine der Wicklungen (16, 18) fließenden elektrischen Strom umfasst.

8. Transformatorschutzsystem nach einem der vorherigen Ansprüche, **dadurch gekennzeichnet, dass** die Auswerteeinheit (28) derart ausgestaltet ist, dass ein Fehlersignal erst bei jeweiliger Detektion eines Störlichtbogens anhand mehrerer physikalisch unabhängiger Messgrößen gegeben wird.

9. Transformatorschutzsystem nach einem der vorherigen Ansprüche, **dadurch gekennzeichnet, dass** die Schnellerdungseinrichtung einen Antrieb aufweist, welcher auf einer initiierbaren explosionsartigen Gasexpansion beruht.

10. Transformatorschutzsystem nach einem der vorherigen Ansprüche, **dadurch gekennzeichnet, dass** das Schutzgehäuse einen Wärmeübertrager zur Abführung der betriebsmäßig in diesem entstehenden Abwärme aufweist.

11. Transformatorschutzsystem nach einem der vorherigen Ansprüche, **dadurch gekennzeichnet, dass** das Schutzgehäuse (12) ein Störlichtbogengehäuse ist.

12. Transformatorschutzsystem nach einem der vorherigen Ansprüche, **dadurch gekennzeichnet, dass** die Schnellerdungsvorrichtung (32, 34, 36, 38) außerhalb des Schutzgehäuses (12) angeordnet ist.

13. Transformatorschutzsystem nach einem der vorherigen Ansprüche, **dadurch gekennzeichnet, dass** dieses mehrere Transformatoren mit jeweiligem Schutzgehäuse (12) aufweist, welche mittels gemeinsamer Verschaltungsmittel elektrisch miteinander verbunden sind und welche eine auf die gemeinsamen Verbindungsmittel wirkende Schnellerdungsvorrichtung (32, 34, 36, 38) aufweisen.

14. Transformatorschutzsystem nach einem der vorherigen Ansprüche, **dadurch gekennzeichnet, dass** die elektrischen Wicklungen (16, 18) dreiphasig ausgeführt sind.

15. Transformatorschutzsystem nach Anspruch 14, **dadurch gekennzeichnet, dass** die Schnellerdungsvorrichtung (32, 34, 36, 38) für eine einphasige Auslösung vorgesehen ist.

16. Transformatorschutzsystem nach einem der Ansprüche 14 oder 15, **dadurch gekennzeichnet, dass** die Schnellerdungsvorrichtung (32, 34, 36, 38) für eine dreiphasige Auslösung zwischen den jeweiligen Phasen vorgesehen ist.
